# EUROPÄISCHE PATENTSCHRIFT

(11) **EP 0 315 143 B1**
(45) Veröffentlichungstag und Bekanntmachung des Hinweises auf die Patenterteilung: **18.08.1993**
(21) Anmeldenummer: 88118244.8
(22) Anmeldetag: 02.11.1988
(51) Int. Cl.: B29C 47/44, B29C 47/64, B29C 47/92, B29B 17/00

(54) **Verfahren zum Extrudieren von Kunststoffen, Extruder zum Ausführen des Verfahrens und Anwendungen**
Method of extruding plastic materials, extruder therefor and use
Procédé d'extrusion de matières plastiques, extrudeuse pour la mise en oeuvre du procédé et application

(30) Priorität: 05.11.1987 DE 3737618
(43) Veröffentlichungstag der Anmeldung: 10.05.1989
(73) Patentinhaber: remaplan Anlagenbau GmbH, D-94436 Simbach (DE)
(72) Erfinder: Mayr, Friedrich J., D-7505 Ettlingen (DE)
(74) Vertreter: Dr. Elisabeth Jung Dr. Jürgen Schirdewahn Dipl.-Ing. Claus Gernhardt

(56) Entgegenhaltungen:
- DE-B- 1 729 373
- DE-C- 1 037 698
- PATENT ABSTRACTS OF JAPAN, Band 12, Nr. 400 (M-756)(3247), 24. Oktober 1988; & JP-A-63 144 031 (Ishikawajima Harima Heavy Ind Co Ltd) 16.06.1988

## Beschreibung

Die Erfindung bezieht sich auf ein Verfahren zum Extrudieren von Kunststoffen gemäß Anspruch 1, einen Extruder zum Ausführen des Verfahrens sowie auf Anwendungen sowohl des Verfahrens als auch des Extruders.

Ein beim Extrudieren von Kunststoffen verwendeter Extruder weist eine Plastifiziereinheit auf, in welcher zugeführtes Kunststoffrohmaterial plastiziert und an ein nachschaltbares Extrusionswerkzeug weitergegeben wird. Die Erfindung befaßt sich vornehmlich mit der Ausbildung der Plastifiziereinheit (vgl. Kunststoffmaschinenführer, hrsg. von Friedrich Johannaber und Klaus Stoeckhert, zweite Ausgabe, München, Wien, Hanser 1984, S. 162) und deren Einwirkung auf den zu verarbeitenden Kunststoff.

In der Plastifiziereinheit ist eine Extruderschnecke vorgesehen, die axial innerhalb eines Zylinderrohres verläuft, das auch Schneckenzylinder genannt wird. Stromaufwärts wird dem Ringraum zwischen Extruderschnecke und Zylinderrohr das zu verarbeitende Kunststoffrohmaterial zugeführt, das von der Extruderschnecke axial weitergefördert wird. Dabei passiert der Kunststoff einen Abschnitt der Extruderschnecke, der als sogenanntes Scherteil ausgebildet ist. Dieses wirkt mit der Innenwand des Zylinderrohres zusammen, um auf den Kunststoff eine hohe Friktionskraft auszuüben, um das Kunststoffmaterial optimal zu homogenisieren. Üblicherweise ist die Plastifiziereinheit mit einer Heizeinrichtung versehen, welche in mehrere axial längs des Zylinderrohres verteilten Abschnitten eine einstellbare Betriebstemperatur gewährleistet. Die Scherung im Bereich des Scherteils ist jedoch für die Qualität des extrudierten Erzeugnisses von herausragender Bedeutung.

Bei der Auslegung von Scherteilen muß die Scherspaltweite erstens auf die Fördermenge und zweitens auf die Schneckenumfangsgeschwindigkeit (Kunststoffmaschinenführer a.a.O., S. 161, Z. 4 bis 2 v. u.) und drittens auf das spezielle Fließverhalten der jeweils verarbeiteten Kunststoffmassen (Saechtling, Hansjürgen, Kunststoff-Taschenbuch / begr. von Franz Pabst, 20. Auflage, München, Wien, Hanser-Verlag 1977, S. 138, Z. 10 bis 7 v. u.) abgestimmt werden. In der Praxis erfolgt diese Abstimmung bisher88117362 ausschließlich durch Wahl entsprechender konstruktiver geometrischer Parameter für die Gestaltung der Geometrie von Extruderschnecke und Zylinderrohr. Im besonderen wird bei Wechsel des zugeführten Kunststoffrohstoffs dann, wenn bei vorgegebenem Extruder auch das Zylinderrohr vorgegeben ist, die Extruderschnecke, bzw. bei sogenannten Schachtelschnecken wenigstens der Scherteil der Extruderschnecke, ausgewechselt, gegebenenfalls zusammen mit dem nachgeschalteten Mischteil. Ein solcher Schneckenwechsel ist beispielsweise in dem Artikel von E. Grünschloß, Stuttgart, in Kunststoffe 77 (1987) 9., S. 888 bis 892,angesprochen. Dieser Artikel befaßt sich mit dem Einfluß einer Veränderung des Schneckenspaltes, d. h. des freien Spiels zwischen den Schneckengängen und dem Zylinderrohr, welcher den Rückfluß des plastifizierten Kunststoffstromes über die Schneckengänge betrifft. Es ist dabei aber auch die Einstellung des Scherspaltes mit angesprochen (S. 891, Z. 7 und 8 v.u.). Danach wird die Spaltweite im Scherteil des Extruders zwischen der Extruderschnecke und dem diese im Scherteil umgebenden Zylinder durch Auswechseln der ganzen Extruderschnecke oder wenigstens von deren Scherteil vorgenommen.

Bisher hat man Extruderschnecken verwendet, die im Scherteil konstante Ganghöhe haben. Entsprechend ist bisher der Zylinder des Zylinderrohres, welcher mit dem Scherteil zusammenwirkt, mit seiner Innenkontur zylindrisch ausgebildet. Als wesentliche Einflußgrößen zur Beeinflussung der Kunststoffmasse im Scherteil dienten bisher die spezielle Wahl der Schneckengeometrie, einschließlich Länge und Ausbildung von deren Scherteil, sowie die Wahl der im jeweiligen axialen Abschnitt des Extruders zugeordneten Betriebstemperatur und schließlich als sekundäre Einflußgröße, die auch mit der gewünschten Fördermenge zusammenhängt, aber auch die Friktion im Scherteil beeinflußt, der Betriebsdrehzahl der Extruderschnecke. Einige übliche Geometrien von Scherteilen an Extruderschnecken sind beispielsweise im bereits erwähnten Kunststoffmaschinenführer a.a.O., S. 161 beschrieben und dargestellt. Sie zeichnen sich insbesondere dadurch aus, daß in den betreffenden Schneckenzonen eine hohe Scherenergie konzentriert, d. h. in kurzer Zeit in die thermoplastische Masse eingeleitet wird (Zeilen 1 bis 6 der zitierten Seite). Weiteres findet sich auf S. 138, im schon erwähnten Kunststoff-Taschenbuch. Der Auslegung der Scherteile liegt die Überlegung zugrunde, daß allein durch Temperatureinstellung keine hinreichende Plastifizierungsenergie in die Kunststoffmasse eingeleitet werden kann. Dementsprechend sind auch bisher alle Versuche, optimale Betriebsergebnisse durch Temperatureinstellung in bestimmten Zonen des Extruders zu erreichen, als praktisch wenig erfolgversprechend beurteilt worden, vgl. z. B. Kunststoffe 77 (1987) 9., a.a.O., S. 892 mit Literaturhinweisen sowie "Der Blasformbetrieb", Hrsg.: Verein Dt. Ingenieure, VDI-Ges. Kunststofftechnik, Düsseldorf, VDI-Verlag, 1982, S. 166 und 167, insbesondere S. 166, 2. Absatz, S. 1, und schließlich "Kunststoffe Hoechst Blasformen von Thermoplasten", der Hoechst Aktiengesellschaft, Ausgabe April 1975 (ausgegeben bis heute), S. 16 und 17, insbesondere S. 16, Sp. 2, Abs. 2, S. 2.

In jüngster Zeit hat man in Kunststoff 77 (1987) 9. (Zitat wie oben) schon den Einfluß des Schneckenspaltes, nicht Scherspaltes, auf die Güte des extrudierten Produktes bei unterschiedlichen Kunststoffrohmassen untersucht. Dabei wurde ein siebenstufiger Austausch von Schneckenteilen für die Aufschmelzzone vorgesehen (S. 890, Text unter Bild 4), das Scherteil aber unverändert gelassen (S. 889, Bild 3). Es ist aber Praxis, zur Veränderung auch des Scherspaltes den Scherteil oder die ganze Extruderschnecke auszuwechseln.

Ein Austausch von Extruderschnecken, oder wenigstens deren Scherteilen, stellt von vornherein einen unerwünschten großen Investitionsaufwand dar. Hinzu kommen betriebstechnisch die mit der Auswechselung verbundenen Stillstandszeiten und Verluste an Rohmassen während der Übergangsphasen. Es ist ferner auch nur eine relativ grobe Rasterung der zu Verfügung stehenden Spaltweiten möglich, die von der Anzahl der für den Austausch bereit stehenden Extruderschnecken oder mindestens Scherteile abhängt. Eine Veränderung des Scherspaltes während des Extrusionsbetriebes ist dabei unmöglich.

Wie schon erwähnt, haben sich die sonstigen Einflußgrößen, wie insbesondere eine Steuerung der Betriebstemperaturen längs des Extruders, als nur bedingt wirksam ergeben, insbesondere, wenn es um die Einstellung von Massentemperaturen der Kunststoffrohmasse bei großen Fördermengen geht. Bis jetzt weist der Stand der Technik keinen Ausweg aus diesem Dilemma.

Das gilt auch für die Strangpresse nach der deutschen Auslegeschrift 17 29 373, insbesondere Fig. 4. Bei dieser vorbekannten Strangpresse stellt ein mit jeweils einseitig geschlossenen Eingangsnuten Ausgangsnuten versehener Kegelstumpf einen Scherkörper dar, der als Einsatzkörper zwischen zwei stirnseitig einmündenden und weiterführenden Schnecken eingeschaltet wird. Diese beiden Schnecken haben gleichbleibenden Radius, so daß auch die Radien der Spalte zwischen der Schnecke und dem darumbefindlichen Zylinder in dem zum Vorplastifizieren dienenden Spalt vor dem Scherteil und in dem zum Mischen dienenden Spalt hinter dem Scherteil gleich groß sind. Im Übergangsbereich des zum Vorplastifizieren dienenden Spaltes in den Scherteil kommt es bei dieser bekannten Strangpresse zu einem abrupten Radiensprung innerhalb einer sowohl in axialer Richtung als auch in radialer Richtung deutlich ausgeprägten offenen Ringnut vor einer großflächigen radialen Stirnfläche des kegelstumpfförmigen Scherteils. Auch am Ausgangsende des Scherteils ist übrigens eine, wenn auch radial nicht so weit ausgedehnte, aber in axialer Richtung gleich bemessene, Umfangsnut zwischen dem Scherteil und den Gewindegängen der nachfolgenden Schnecke zwischengeschaltet.

Bei dem Herstellungsverfahren mittels dieser bekannten Strangpresse erfolgt das Vorplastifizieren vor dem eigentlichen Plastifizieren in dem besondersgroße Scherkräfte aufbringenden Scherteil,also in einem Spalt gleichen Radius wie das Mischen hinter dem Scherteil. Damit kann man nach dem Gesetz von Bernoulli von gleichen Fördergeschwindigkeiten vor und hinter dem Scherteil ausgehen. Dabei kommt es insbesondere in dem ringförmigen Totraum gegenüber der Stirnfläche des Scherteils an dessen großem Durchmesser zu einer Art struktureller Tötung des vorplastifizierten Kunststoffes wegen dessen relativ langer Verweilzeit in einer großen Ringausnehmung im toten Winkel bei hoher Temperatur, die im Einleitungsbereich der Scherung betriebsmäßig immer vorliegt. Ähnlich unliebsame Auswirkungen hat auch die dem Scherteil nachfolgende Umfangsnut.

Der Erfindung liegt demgegenüber die Aufgabe zugrunde, einen neuen Weg zur Beeinflussung der Plastifizierungsenergie im Bereich des Scherteils des Extruders zu weisen, welcher die genannten Nachteile der erwähnten vorbekannten Maßnahmen mindestens teilweise überwindet.

Ausgehend von der deutschen Auslegeschrift 17 29 373, insbesondere Fig. 4, wird diese Aufgabe bei einem Verfahren gemäß dem Oberbegriff von Anspruch 1 durch dessen kennzeichnende Maßnahmen gelöst.

Das erfindungsgemäße Verfahren vereint zweierlei Gesichtspunkte:
Nach dem ersten Gesichtspunkt ist es möglich, über eine bestimmte relativ große Bandbreite des Scherspaltes mit derselben Extruderschnecke bzw. demselben Scherteil derselben auszukommen, da gattungsgemäß eine Spaltweiteneinstellung durch Verschieben der die Spaltweite definierenden Flächen an Extruderschnecke und Zylinder relativ zueinander möglich ist. Es ist dabei möglich, geometrieunabhängig die Einstellwerte frei zu wählen. Wenn man nicht aus bestimmten Gründen eine Einstellrasterung vorsehen will, die auch unabhängig von der Geometrie frei wählbar ist, kann man sogar die Einstellwerte innerhalb der genannten Bandbreite kontinuierlich wählen (Anspruch 2). Insbesondere kann die Einstellung der Spaltweite sogar während des Extrudierens gesteuert werden (Anspruch 3). Dies ermöglicht es, innerhalb der genannten Bandbreite den Betriebsparameter der Spaltweite am Scherteil in jeder gewünschten Weise zu wechseln, ohne dabei den Extruder außer Betrieb setzen zu müssen. Mit oder auch ohne zusätzliche(r) Einflußnahme der üblichen Temperaturregelung oder -steuerung läßt sich dabei eine optimale Anpassung an die jeweils gewünschten Friktionsverhältnisse im Scherspalt am Scherteil erreichen. Dabei kann man nicht nur unterschiedliche Betriebsverhältnisse, die sich während des Extrudierbetriebes ergeben, sei es durch Änderungen der Einflüsse von Extruderseite, sei es durch Variationen der Eigenschaften der verarbeiteten Kunststoffmasse, unabhängig von der Temperaturbeeinflussung noch viel wirksamer als durch diese einstellen; man kann sogar während des Betriebes im Rahmen der Bandbreite der Fließeigenschaften des Kunststoffrohmaterials die in den Kunststoff eingeleitete Friktion abändern.

Nach dem kennzeichnenden zweiten Gesichtspunkt wird in einem relativ großen Spaltdurchmesser zum Scherteil angefördert und dabei vorplastifiziert, ohne daß es zu einem negative Einwirkungen auf den Kunststoff ausübenden Verweilen am Übergang in den Scherteil kommt. Die Vorplastifizierung bei großem Radius des Spaltes im Vorplastifizierungsbereich führt zu einem langsamen Transport großer Kunststoffmengen mit relativ großem Hebelarm, so daß auch hochpolymerisierte Kunststoffmaterialien vor der Scherung schonend homogenisiert werden können. Das hat besondere Bedeutung insbesondere für die Materialien der beiden Anwendungsansprüche der Erfindung, aber auch für andere hochpolymere Ausgangsmaterialien.

Andererseits wird nach Radiusverkleinerung des Spaltes zwischen Extruderschnecke und Zylinder hinter dem Scherteil wegen des Gesetzes der Kontinuität der Massenförderung die Fördergeschwindigkeit beschleunigt. Dies führt dazu, daß es in dem Mischteil hinter der Schereinheit nicht zu einem zu langen Aufenthalt des Kunststoffes hinter dem Scherteil innerhalb des Extruders kommt, sondern der gescherte und dann im Mischteil nachgemischte Kunststoff schnell abgeführt wird. Damit können insbesondere sonst häufig beobachtete Nachstrukturierungen hinter dem Scherteil, z.B. ein Entstehen gitterförmiger Strukturen im Kunststoff, vermieden werden.

Es ist dabei erfindungswesentlich, daß sich die Merkmale des genannten zweiten Gesichtspunktes auf eine Anordnung mit axial verschiebbarem konischen Scherteil und damit Einstellbarkeit der Weite des Scherspaltes gemäß dem ersten Gesichtspunkt beziehen, wie dies nach den Merkmalen des Oberbegriffs von Anspruch 1 vorausgesetzt wird. Es hat sich gezeigt, daß der gattungsgemäße erste Gesichtspunkt in der deutschen Auslegeschrift 17 29 373 nicht konsequent zu Ende gedacht worden ist, was sich aus dem oben herausgestellten zweiten Gesichtspunkt deutlich ergibt.

Dies hat auch seinen Niederschlag in der Betriebspraxis gefunden. Es ist dabei davon auszugehen, daß vor dem Prioritätstag der Durchschnittsfachmann gemäß Nachfragen der Anmelderin bei Herstellern von Kunststoffextrudern nicht die Möglichkeit gehabt hat, in demselben Extruder ohne Wechsel der Extruderschnecke - ein sehr kosten- und zeitaufwendiger Akt - von einem Kunststoffmaterial auf ein anderes überzugehen. Dies gilt bereits für den Wechsel von etwa Polyäthylen auf Polypropylen und erst recht für schwierigere Produkte, wie Mischkunststoffe oder Recycling-Kunststoffe. Ein Wechsel von dem einen Kunststoff auf den anderen ist nunmehr aufgrund der Vereinigung des ersten Gesichtspunkts mit dem zweiten Gesichtspunkt in derselben Maschine allein durch entsprechende Verstellung der axialen Lage der Extruderschnecke möglich. In der deutschen Auslegeschrift 17 29 373 ist man demgegenüber über eine Optimierung der Einstellungsbedingungen auf bestimmte Kunststoffarten durch axiale Verstellung der Schnecke nicht hinausgekommen.

Von besonderer Bedeutung ist das erfindungsgemäße Verfahren dann, wenn man Mischkunststoffe verarbeiten will oder gar Recycling-Kunststoffe. Oft ist bei Recycling-Kunststoffen die Art des Grundstoffes gar nicht oder nicht exakt bekannt oder bestimmbar. Darüber hinaus handelt es sich auch bei Recycling-Kunststoffen sehr häufig um schwer verarbeitbare Mischkunststoffe. Bisher hat man solche Recycling-Mischkunststoffe nur unter relativ engen Bedingungen verarbeiten können. Dazu gehören besonders ausgelegte Extruder, häufig mit mehreren Extruderschnecken, in Verbindung mit besonderen Vorbehandlungen des Recycling-Rohstoffs, wie etwa durch Waschen. Unter Waschen versteht man Sedimentations- und Flotationswäsche des geschnitzelten Kunststoffrohstoffs mit anschließender Trocknung.

Durch das erfindungsgemäße Extrusionsverfahren erhält man demgegenüber eine wesentlich größere Variationsbreite bei der Verarbeitung von Recycling-Kunststoffen mit wechselnden Fließeigenschaften in demselben Extruder. Dabei ermöglicht es die Erfindung zugleich, bei Wechsel der Fließeigenschaften sofort nachzusteuern oder auf einen oder mehrere vorgewählte Parameter nachzuregeln, und zwar sogar unter nahezu verzugsfreier Reaktion während des fortlaufenden Extrusionsbetriebes. Die erfindungsgemäß mögliche Nachstellung des Scherspaltes ist dabei im allgemeinen schneller und durchgreifender wirksam als eine daneben auch mögliche thermische Beeinflussung, die immer mit erheblichen Trägheiten versehen ist.

Das erfindungsgemäße Verfahren macht es somit möglich, Extrusionserzeugnisse selbst bei Wechsel des Rohstoffs innerhalb einer vorgegebenen Bandbreite mit optimaler und gleichmäßiger Qualität zu fertigen.

Als Steuer- oder Regelgrößen bieten sich einzeln oder gemeinsam verschiedene Betriebsparameter an, von denen einige besonders wesentliche in den Ansprüchen 5 bis 7 genannt sind. Das antriebsseitige Reaktions-Drehmoment (vgl. Anspruch 5) kann man dabei gegebenenfalls indirekt über die Leistungsaufnahme des Drehantriebs der Extruderschnecke bestimmen.

Die direkte oder indirekte Messung der Massentemperatur des Kunststoffs im Scherspalt gemäß Anspruch 6 bedeutet die direkteste Messung der durch die Erfindung unmittelbar beeinflußten Betriebsgröße. Eine Messung an dieser Stelle ist bisher nicht üblich. Bisher ist es üblich, die Temperatur an der Schneckenspitze zu messen und danach die Temperaturverhältnisse am Extruder zu steuern. Die Messung des jeweils am Torpedo auftretenden Staudrucks nach Anspruch 7 stellt wiederum wie die schon erwähnte Messung des antriebsseitigen Reaktionsdrehmoments eine Bezugnahme auf eine indirekte Einflußgröße dar.

Zwar zeigt auch schon die deutsche Auslegeschrift 11 97 611 eine axial verstellbare Extruderschnecke. Diese soll aber eine zweite Drosselstelle steuern, die zusätzlich zu einer ersten Drosselstelle vorgesehen sein soll, welche mittels einer in der Schnecke axial verschiebbaren Nadel gesteuert wird. Keine dieser beiden Drosselstellen definiert aber ein Scherteil im Sinne der Erfindung. Ein solches ist an der Spitze der Extruderschnecke a priori nicht vorhanden, und die zweite Drosselstelle ist lediglich von einem Ringwulst der (sonst gleichen Radius besitzenden) Schnecke gebildet, der in eine Ringnut im Zylinder eingreift. Beide Drosselstellen haben dementsprechend keine Scheraufgabe (keine Schernuten!), sondern dienen lediglich dazu, den vor der jeweiligen Drosselstelle herrschenden Massendruck einzustellen. Unter Verwendung dieser beiden unabhängigen Drosselstellen soll, insbesondere auch bei schwierig zu verarbeitenden Kunststoffen, die Qualität des Spritzerzeugnisses erheblich verbessert werden. Im Wege dieser Aufgabenstellung wird jedoch nur, wenn auch in Verfeinerung auf zwei unabhängig steuerbare Drosselstellen, auf den Massenrückhalt Einfluß genommen. Die deutsche Auslegeschrift 11 97 611 bleibt dabei bei dem an sich schon bekannten Prinzip, den Massenrückhalt zu steuern, wenn auch bis dahin nur mittels einer Drosselstelle. Eine Steuerung eines Scherspaltes ist nicht vorgesehen. Diese Vorveröffentlichung befaßt sich somit insbesondere auch nicht mit der Möglichkeit, verschiedene schwer verarbeitbare Kunststoffe mit demselben Extruder verarbeiten zu können.

Die deutschen Auslegeschriften 11 45 787 und 11 87 010 und die US-Patentschrift 25 93 265 sind Beispiele für den in der deutschen Auslegeschrift 11 97 611 bereits vorausgesetzten Stand der Technik der Anordnung einzelner Drosselstellen.

Im Falle der deutschen Auslegeschrift 11 45 787 ist dabei nur eine verschiebbare Extruderschnecke mit gleichbleibendem Außendurchmesser in Betracht gezogen.

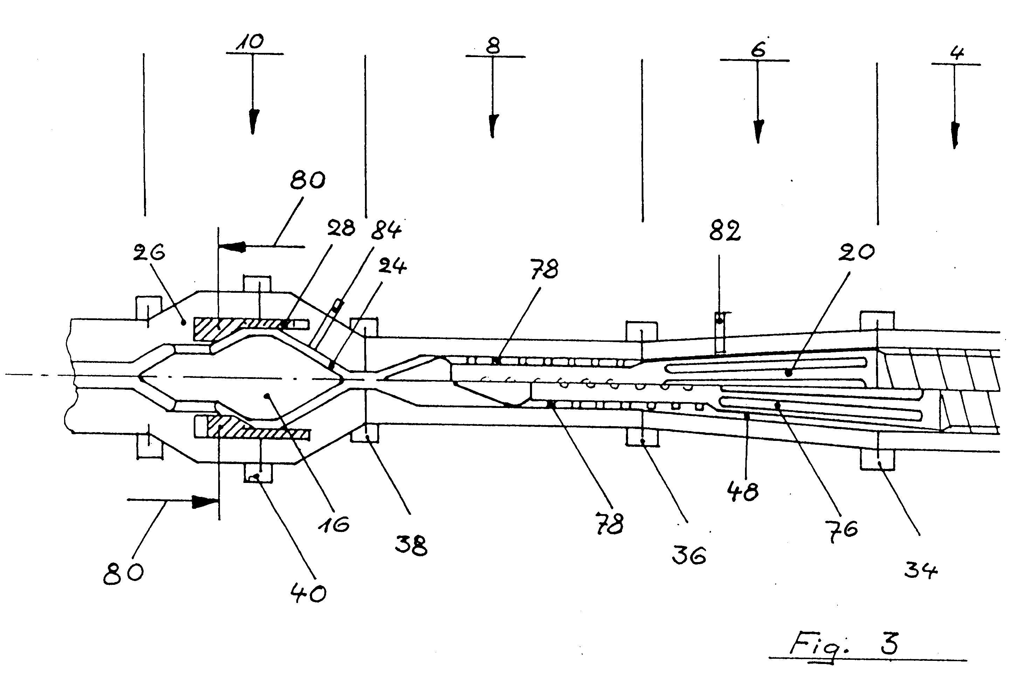

Im Falle der deutschen Auslegeschrift 11 87 010 wird eine Drosselstelle an der Spitze der Schnecke oder an einer Ringschulter einer Schnecke mit unterschiedlichem Radius nicht durch eine in der Schnecke verschiebbare Nadel, sondern durch axiale Verschiebung der Schnecke selbst gesteuert. Es ist aus der Fig. 3 dabei an sich schon bekannt, eine Schnecke mit Wechsel in Förderrichtung von einem großen zu einem kleinen Radius zu verwenden. Im konischen Übergangsbereich ist jedoch kein Scherteil angeordnet, sondern lediglich eine Staustelle zum Zurückdrängen von Luft- und Gasblasen. Wie im Falle der deutschen Auslegeschrift 11 97 611 will auch die deutsche Auslegeschrift 11 87 010 nur den Massenrückhalt bzw. den Rückdruck, was dasselbe ist, einstellbar oder auch regelbar machen.

Die US-Patentschrift 25 93 265 schließlich betrifft wiederum die Steuerung einer Drosselstelle an der Spitze der Schnecke, hier unter Verwendung einer axial in der Schnecke verschiebbaren Nadel.

Das erfindungsgemäße Verfahren wird vorteilhaft durch einen Extruder gemäß Anspruch 9 verwirklicht. Dieser stellt eine besonders einfache konstruktive Ausführungsform eines Extruders dar, mit dem in Sinne des Verfahrensanspruchs 1 nicht nur die Weite des Scherspalts kontinuierlich eingestellt werden kann, sondern auch im Sinne des zweiten Gesichtspunkts schonsam auf unterschiedliche und insbesondere schwierige Extrusionsmassen eingewirkt werden kann. Alternativ könnte man beispielsweise daran denken, die Extruderschnecke und/oder das Zylinderrohr mit axial verstellbaren Schiebesegmenten zu versehen.

Zur Veranschaulichung sei erwähnt, daß typische Werte der im Rahmen der Erfindung möglichen kontinuierlichen Einstellung des Scherspaltes, also die typische Bandbreite eines erfindungsgemäßen Extruders, gerade auch die übliche Spaltweitenvariation von z.B. 0,4 bis 2,4 mm (vgl. Kunststoffmaschinenführer a.a.O. S. 161, Abs. 2, Z. 2) sein kann. Für die Überdeckung einer solchen Bandbreite hat man bisher eine Vielzahl von verschiedenen Scherteilen bzw. ganzen Extruderschnecken einsetzen müssen.

Es ist nicht zwingend notwendig, aber vorteilhaft, wenn die Konuswinkel der Außenkontur des Scherteils und der Innenkontur des Zylinders gleich sind.

Besonders zweckmäßig ist die schon gattungsgemäß vorausgesetzte Verengung des Konuswinkels der Außenkontur des Scherteils und der Innenkontur des Zylinders in Extrusionsrichtung. Hierdurch lassen sich in meist erwünschter Weise der durch den Förderdruck der Kunststoffmasse erzeugte Druck in Förderrichtung und der dagegen wirkende Staudruck am besten ausbalancieren. In Sonderfällen mag man eine gleichsinnige Verstärkung beider Drücke vorziehen, was auch von der Art der Antriebsmittel für die erfindungsgemäß vorgesehene axiale Verstellung der Extruderschnecke abhängen kann.

Die Maßnahmen der Ansprüche 11 und/oder 12 ermöglichen es, über die erfindungsgemäß vorgesehene Bandbreite hinaus auch noch durch konstruktiven einfachen Umbau des Extruders die Bandbreite weiter zu erhöhen. Dabei ist der erforderliche Investitionsaufwand weitaus geringer als bisher. Man kann gegebenenfalls sogar einen erfindungsgemäßen konischen Scherteil mit zugehörigem konischen Zylinder mit konventionellen zylindrischen Scherteilen und Zylindern austauschen.

Die Ansprüche 12 bis 17 betreffen vorteilhafte Antriebsarten der nach der Erfindung axial bewegbaren Extruderschnecke (vgl. hierzu auch die US-Patentschrift 29 44 286). Die Ansprüche 18 und 19 betreffen für einen Extruder gemäß der Erfindung typische Meßfühleranordnungen.

Der im Anspruch 19 vorzugsweise vorgesehene verstellbare Staudruckring ergibt dabei eine im Rahmen der Erfindung auch allgemein verfahrensmäßig zweckmäßige weitere Einflußmöglichkeit, nämlich die, die mit der Veränderung der Weite des Scherspaltes einhergehende Änderung des Staudrucks auf gewünschte Werte nachsteuern oder nachregeln zu können (vgl. Verfahrensanspruch 8).

Eine solche Veränderung des Staudrucks zusammen mit der Veränderung des Scherspaltes ist insbesondere zweckmäßig, aber nicht immer zwingend erforderlich, wenn man Unstetigkeiten des Fließgeschwindigkeitsprofils der Schmelze entgegenwirken will. Ein axial vor- und rückstellbarer Stauring ist an sich bei Extrusionswerkzeugen bekannt. Im Rahmen der Erfindung ist es zweckmäßig, ihn in den Extruder mit einzubeziehen als mit dem Torpedo zusammenwirkende Blende zur Staudruckerzeugung.

Die Anwendungsansprüche 20 bis 22 betreffen besonders schwierige Anwendungsfälle bei der Extrusion von Kunststoff, die mit dem erfindungsgemäßen Verfahren bzw. der erfindungsgemäßen Vorrichtung besser als bisher lösbar sind. Dazu gehört auch eine Erleichterung beim Einarbeiten von nicht kunststoffartigen Zusatzstoffen zum Rohkunststoff, wie beispielsweise von Talkum oder Kreide. Das erfindungsgemäße Verfahren und der erfindungsgemäße Extruder erweisen sich insoweit ebenso als vielseitiger wie in der Anpaßbarkeit an die weiten Grenzen der Schmelzeigenschaften von gebrauchten Kunststoffen, was etwa Viskosität, Dichte und Entgasung nach dem Aufschmelzen anbelangt.

Die Erfindung wird im folgenden anhand schematischer Zeichnungen an einem Ausführungsbeispiel noch näher erläutert. Es zeigen:
- Fig. 1: einen Extruder und die
- Fig. 2 und 3: jeweils im vergrößerten Maßstab den antriebsseitigen bzw. den werkzeugseitigen Teilbereich des Extruders gemäß Fig. 1,
wobei alle drei Darstellungen in eine obere und eine untere Halbebene unterteilte Längsschnitte durch die Achse des Extruders mit Extrusionsrichtung in der Zeichenebene von rechts nach links darstellen. Der Extruder gliedert sich in der Zeichnungsebene von rechts nach links in die Antriebseinheit 2, die Förder- und Plastifiziereinheit 4, die homogenisierende Schereinheit 6, den Mischteil 8 und eine Staudruckreguliereinheit 10. Die Extruderschnecke 12 erstreckt sich durch die Einheiten 2 bis 8 und verläuft dabei axial innerhalb des Zylinderrohres 14, welches sich längs der Einheiten 4 bis 8 erstreckt. Innerhalb der Staudruckreguliereinheit 10 ist der Torpedo 16 des Extruders mit axialer Erstreckung ortsfest angeordnet.

An dem der Antriebseinheit 2 benachbarten Ende der Förder-und Plastifiziereinheit 4 ist ein Einfüllstutzen 17 von dem Zylinderrohr 14 radial abstehend, durch den geschnitzeltes (Recycling-Kunststoff) oder pulver- bzw. granulatförmiges (Neu-Kunststoff) Kunststoffrohmaterial in den Ringraum zwischen dem Zylinderrohr 14 und der Extruderschnecke 12 eingebracht werden kann. Dieser Kunststoff wird durch schneckenartige Fördergänge der Extruderschnecke 12 in den Ringraum 18 zwischen Extruderschnecke 12 und Zylinderraum 14 der Schereinheit 16 zugeführt, innerhalb derer die Extruderschnecke 12 als Scherteil 20 ausgebildet ist, welches mit dem Zylinder 22 des Zylinderrohres 14 innerhalb der Schereinheit unter Ausübung hoher Friktion auf den angeförderten und in der Förder- und Plastifiziereinheit vorplastifizierten Kunststoff zusammenwirkt.

Aus der Schereinheit 6 gelangt der Kunststoff in den Ringraum 18 zwischen der Extruderschnecke 12 und dem Zylinderrohr 14 innerhalb des Mischteils 8, wo die Extruderschnecke 12 am in Förderrichtung folgenden Ende des Mischteils 8 endet. Von dort tritt der Kunststoff über einen zentralen axialen Kanal 24 aus dem Ringraum 18 in die Staudruckreguliereinheit über, in welcher sich der Kunststofffluß wiederum in einen Ringraum 24 verzweigt, der zwischen dem Torpedo 16 und einem äußeren Gehäuseabschnitt 26 mit Stauring 28 gebildet ist. Von dort tritt die Kunststoffmasse wiederum durch einen axialen Kanal 30 in ein vorschaltbares, auswechselbares, nicht dargestelltes Extrusionswerkzeug über.

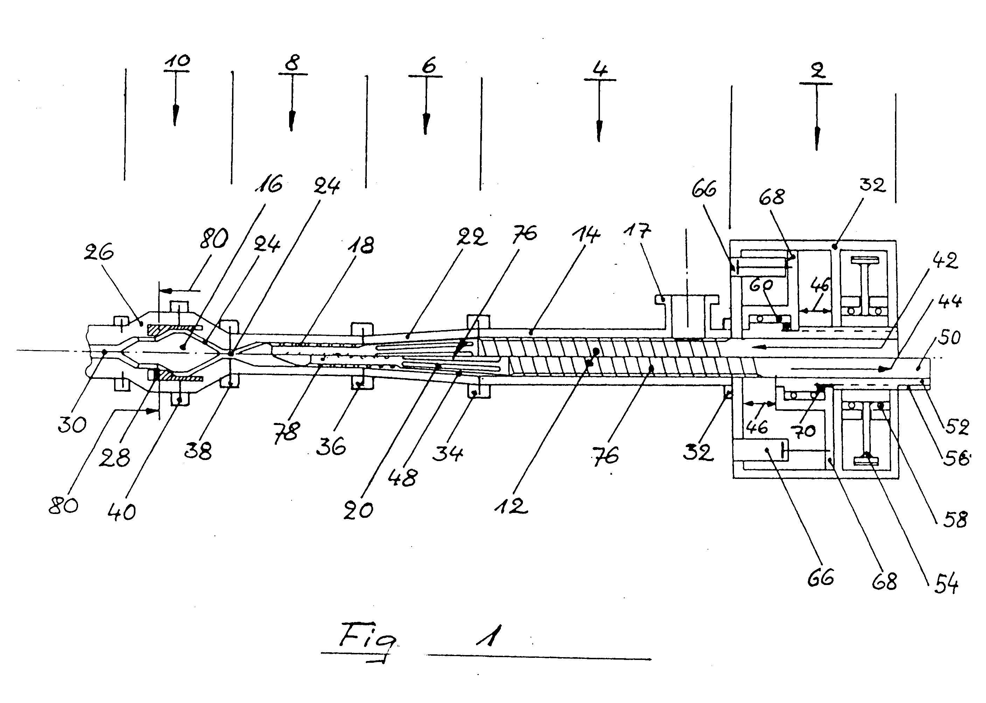

Wie auch in Fig. 1 zu erkennen, ist allein die Schereinheit 6 in Extrusionsrichtung verjüngt ausgebildet, und zwar sowohl im Scherteil 20 als auch in dem diesen umgebenden Zylinder 22, während die Extruderschnecke 12 sowie das Zylinderrohr 14 im Bereich der Antriebseinheit 2 (bezüglich der Extruderschnecke), der Förder- und Plastifiziereinheit 4 sowie im Maschinenteil 8 in konventioneller Weise jeweils zylindrisch verlaufen. Dabei ist der Zylinderdurchmesser des Mischteils 8 gegenüber dem Zylinderdurchmesser der Förder- und Plastifiziereinheit 4 kleiner, was sich nicht nur auf die Innendurchmesser auszuwirken braucht, sondern in der dargestellten Weise auch die Außendurchmesser betreffen kann.

Anders ausgedrückt hat die Extruderschnecke 12 in Extrusionsrichtung vor dem Scherteil einen Radius, der dem Eingangsradius des konischen Scherteils 6 entspricht und an dessen großen Durchmesser angeschlossen ist, während die Extruderschnecke 12 in Extrusionsrichtung nach dem Scherteil 6 einen kleineren Durchmesser hat, der dem kleinen Durchmesser des konischen Scherteils entspricht. Die Anschlüsse erfolgen dabei beidseitig des Scherteils 6 ohne Toträume durch stetigen Übergang von den Gewindegängen der zu fördernden Extruderschnecke in die Nuten des Scherteils 6 und von diesen in die Gewindegänge der abfördernden Extruderschnecke 12. Dabei können wie in Fig. 1 dargestellt die Übergangsorte von einzelnen Gewindegängen in und von Nuten des Scherteils an axial unterschiedlichen Orten angeordnet sein bzw. einer geeigneten örtlichen axialen Verteilungskurve folgen, z.B. in stetig aufeinander folgender Versetzung in bezug auf Gruppen von Gewindegängen und Nuten.

Mit Flanschen 32, 34, 36, 38 und 40 ist die axiale Zusammensetzbarkeit des Gehäuses 32 der Antriebseinheit 2 mit dem Zylinderrohr der Förder- und Plastifiziereinheit 4 sowie der Bereiche des Zylinderrohres in den Einheiten 4, 6 und 8 sowie auch die zweiteilige Zusammensetzbarkeit des Gehäuseabschnitts 26 der Staudruckreguliereinheit 10 deutlich gemacht. Dem entspricht in nicht dargestellter Weise auch die Zusammensetzbarkeit der Extruderschnecke 12 in den Einheiten 2, 4, 6 und 8 aus einzelnen Schneckenelementen. Diese Zusammensetzbarkeit ist bevorzugt, jedoch nicht zwingend erforderlich.

Die Extruderschnecke 12 ist im Zylinderrohr 14 axial verstellbar. Hierzu sind in den Figuren in der oberen und in der unteren Zeichnungshälfte unterschiedliche axiale Stellungen dargestellt, und zwar jeweils in der oberen Zeichnungshälfte eine Stellung mit Verschiebung in der Zeichnungsebene nach links entsprechend dem Pfeil 42 und in der unteren Zeichnungshälfte in der Zeichenebene nach rechts entsprechend dem Pfeil 44. Die Verstellweite ist dabei durch die Doppelpfeile 46 verdeutlicht. Ein typischer axialer Verstellweg entsprechend den Doppelpfeilen 46 beträgt dabei 100 mm.

Mit diesem Verstellweg läßt sich in der Schereinheit 6 der sich über die ganze Länge der Schereinheit 6 erstreckende Scherspalt 48 in dem Bereich zwischen 0,4 bis 2,4 mm verstellen. Hierzu verjüngen sich die Außenkontur des Scherteils 20 und die Innenkontur des Zylinders 22 mit vorzugsweise demselben Konuswinkel gleichmäßig vom Anschluß an die Förder-und Plastifiziereinheit 4 bis zum Anschluß an den Mischteil 8. Dies hat zur Folge, daß bei Verschiebung der Extruderschnekke 12 in Extrudierrichtung um 5 mm eine Erweiterung des Scherspalts 48 um 0,1 mm zur Folge hat. Es versteht sich, daß diese typischen Werte im Rahmen der angestrebten Betriebsbedingungen variiert werden können. Immerhin kann man mit der genannten speziellen konstruktiven Auslegung die gängige Bandbreite von Scherspalten 48 in der Schereinheit 6, die man bisher durch Auswechslung der Scherteile 20 oder der ganzen Extruderschnecke 12 punktuell überdeckt hat, nunmehr kontinuierlich mit demselben Extruder überdecken. Die Extruderschnecke 12 ist innerhalb der Förder- und Plastifiziereinheit 4 sowie innerhalb des Mischteils 8 durch das typische geringe Schneckenspiel gegenüber dem Zylinderrohr 14 von beispielsweise 0,15 mm radial gelagert.

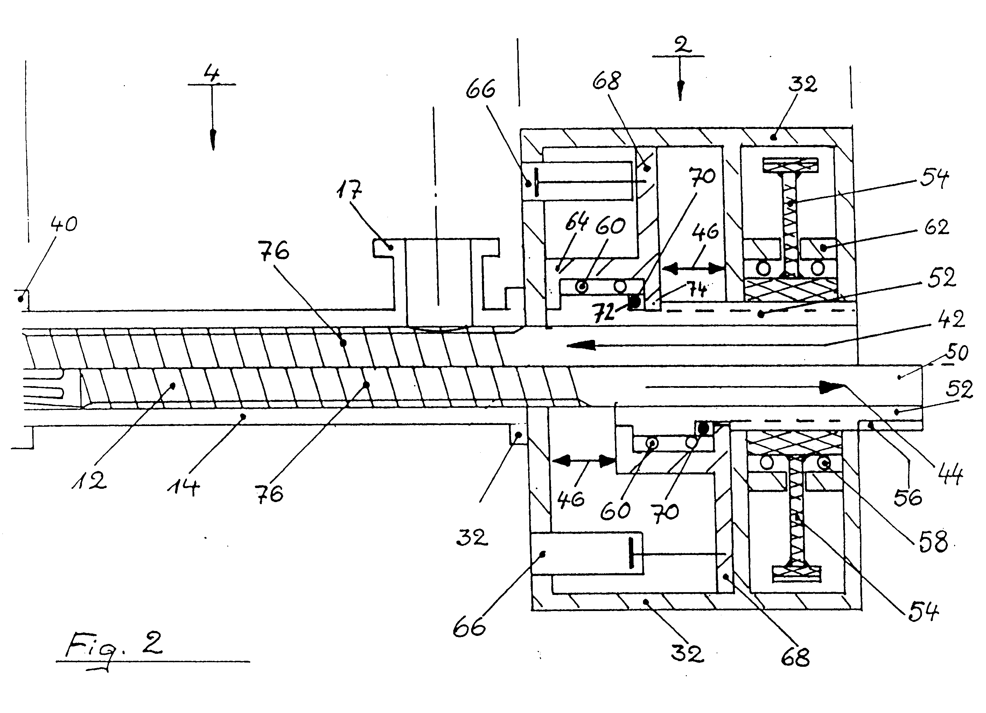

Innerhalb der Antriebseinheit 2 ragt gemäß Fig. 2 ein gangfreier Schaft 50 in eine koaxiale Hülse 52, innerhalb derer die Extruderschnecke dreh- und verschiebefest verkeilt ist.

Die Hülse 52 ist also zusammen mit der Extruderschnecke 12 über den Verschiebeweg gemäß dem Doppelpfeil 46 innerhalb des ortsfesten Gehäuses 32 axial hin und her verstellbar.

Ein im einzelnen nicht dargestellter Drehantrieb, beispielsweise ein über ein mechanisches Getriebe gekoppelter Drehstrommotor, wirkt über ein mit der Extruderschnecke 12 koaxiales Endzahnrad 54 auf eine mit diesem kämmende Außenverzahnung 56 der Hülse 52. Dabei ist das Endzahnrad 54 ortsfest im Gehäuse 32 gelagert. Die Außenverzahnung 56 der Hülse ist dabei so gewählt, daß die Hülse 52 sich gegenüber dem Endzahnrad 54 axial verschieben kann. Innerhalb des Gehäuses 32 der Antriebseinheit 2 ist dabei die Hülse 52 durch zwei axial aufeinander folgende Wälzlager 58 und 60 radial gelagert. Das Wälzlager 58 ist dabei radial außen von Lagerabschnitten 62 abgestützt, die starr mit dem Gehäuse 32 verbunden sind.

Das Wälzlager 60 ist demgegenüber radial außen von Lagerabschnitten 64 abgestützt, die innerhalb des Gehäuses 32 zusammen mit der Hülse 52 verschiebbar sind.

Zur axialen Verstellung der Extruderschnecke 12 mitsamt Hülse 52 dienen über deren Umfang verteilte Stellglieder 66, von denen vorzugsweise mindestens drei, zweckmäßig noch mehr, in Umfangsrichtung äquidistant vorgesehen sind. Dargestellt ist eine Ausführungsform, bei der vier derartige Stellglieder 66 vorgesehen sind, von denen zwei zu sehen sind. Diese Stellglieder sind zweckmäßig mechanische, elektrische oder hydraulische Stellglieder, jedenfalls allgemein solche, mit denen eine sehr präzise und verzögerungsfreie Einstellung einer gewünschten Axiallage der Extruderschnecke 12 möglich ist. Man erkennt, daß diese Stellglieder 66 am Gehäuse 32 abgestützt sind und auf einen Verschiebeflansch 68 (oder eine Gabel) wirken, der mit dem hülsenartigen Lagerabschnitt 64 starr verbunden ist und mit formschlüssigem Eingriff in die Hülse 52 auch mit dieser verschiebefest verbunden ist, wobei sich jedoch die Hülse 52 gegenüber dem Verschiebeflansch 68 frei drehen kann.

Ein axiales Drucklager 70 ist zwischen einer der Förder-und Plastifiziereinheit 4 zugewandten Schulter 72 und einem radial nach innen ragenden Fortsatz 74 des Lagerabschnitts 64 wirksam.

In Fig. 2 ist ferner dargestellt, daß in der Förder- und Plastifiziereinheit 4 die Extruderschnecke 12 mit schnekkenartig ausgebildeten Schneckenstegen 76 versehen ist, die zur axialen Förderung in der Zeichnungsebene nach links des durch den Einfüllstutzen 17 zugeführten Rohkunststoffs dienen.

Aus Fig. 3 ist zu ersehen, daß in der Schereinheit 6 das Scherteil 20 von über den Umfang der Extruderschnecke 12 verteilten Sperrstegen gebildet ist, deren Außenkontur zugleich die Außenkontur des Scherteils bildet. Die Sperrstege 76 verlaufen dabei mit in Umfangsrichtung in jeder Querschnittsebene äquidistantem Abstand in Achsrichtung der Extruderschnecke 12. Dabei sind in im einzelnen nicht dargestellter Weise zwischen den Sperrstegen Aufnahmenuten für die Kunststoffmasse gebildet, welche abwechselnd axial nach vorne und axial nach hinten offen sind, so daß bei der Förderung des Kunststoffs längs der Extruderschnecke der Kunststoff jeweils den Scherspalt durchtreten muß, der zwischen der Außenkontur der Sperrstege 76 und der Innenkontur des Zylinders 22 gebildet ist.

Eine derartige Ausbildung des Scherteils kann nach dem System Troester oder dem System Maddock (vgl. Kunststoffmaschinenführer S. 161) erfolgen. Man kann aber gegebenenfalls auch andere bekannte Ausführungsformen von Scherteilen einsetzen.

Im Mischteil 8 ist eine Ausführungsform mit Krausköpfen 78 dargestellt, die im Zuge von Schneckengängen aufeinander folgen. Stattdessen kann man auch andere bekannte Ausführungsformen von Mischteilen vorsehen, wie beispielsweise mit Sperrscheiben oder Schlitzscheiben (Kunststoffmaschinenführer a.a.O. S. 162).

In der Staudruckreguliereinheit 10 schließlich ist der Stauring 28 ringkolbenartig ausgebildet und in dem Gehäuseabschnitt 26 axial verschieblich geführt. In der oberen Zeichnungsebene ist dabei eine axiale Stellung mit maximaler Einstellung in Extrudierrichtung und in der unteren Zeichnungshälfte eine axiale Stellung mit maximaler Einstellung entgegen der Extrudierrichtung dargestellt, wobei der Stauring jeweils stirnseitig an einer zugeordneten, nicht näher bezeichneten Schulter des Gehäuseabschnittes 26 anschlägt.

Die beiden gegenläufigen Pfeile 80 sollen die kontinuierliche wahlweise Einstellbarkeit des Staurings über nicht dargestellte axiale Stellmittel darstellen.

Man erkennt, daß in der in der oberen Zeichnungsebene dargestellten Endstellung der Spalt zwischen Stauring 28 und Torpedo 16 maximale Größe und in der unteren Zeichnungsebene minimale Größe hat, wodurch der Staudruck des Kunststoffs in der Staudruckreguliereinheit 10 zwischen diesen beiden Endstellungen kontinuierlich verstellbar ist.

Der Einfachheit halber sind die üblichen zur thermischen Konditionierung vorgesehenen Heizmittel nicht mit eingezeichnet. Sie werden meist durch um das Zylinderrohr 14 gewickelte elektrische Heizbänder verwirklicht, die über axial aufeinander folgende und einzeln thermisch einstellbare Abschnitte aufeinander folgen. Entsprechend wird man auch den Gehäuseabschnitt 26 der Staudruckreguliereinheit 10 von außen her kontrolliert heizen.

Die Zweiteilung des Gehäuseabschnittes 26 mittels der Flansche 40 ist vorgesehen, um den Stauring 28 und den Torpedo 16 einbauen zu können, die von beiden Achsseiten her im Gehäuseabschnitt 26 umfaßt sind.

Nur rein schematisch ist in der Schereinheit 6 ein Meßfühler 82 eingezeichnet, der, beispielsweise als Thermoelement, bis in die Nähe der geschlossen bleibenden Innenkontur des Zylinders 22 reicht und so dazu dient, indirekt die Massentemperatur des Kunststoffs im Scherspalt zu bestimmen. An die Stelle eines Thermofühlers kann auch jeder andere geeignete Temperaturfühler treten.

Ebenso rein schematisch ist im Bereich der Staudruckreguliereinheit 10 ein Meßfühler 84 eingezeichnet, der beispielsweise als Bohrung im Gehäuseabschnitt 26 ausgebildet sein kann, welche mit einem Druckfühler in Verbindung steht, beispielsweise einem piezoelektrischen Meßfühler zur Messung des Staudrucks in Extrudierrichtung vor dem Stauring 28.

## Patentansprüche

1. Verfahren zum Extrudieren von Kunststoffen, bei dem die Scherspaltweite in einem einen vorplastifizierten Kunststoff weiter plastifizierenden Scherteil des Extruders zwischen der Extruderschnecke und dem diese im Scherteil umgebenden Zylinder eingestellt wird und zur Weiteneinstellung des Scherspaltes die dessen Spaltweite definierenden Flächen an Extruderschnecke und Zylinder relativ zueinander verschoben werden, wobei der aus dem Scherspalt herausgeförderte gescherte Kunststoff in dem in Förderrichtung anschließenden Mischspalt bei einem Radius des Mischspaltes gemischt wird, welcher dem Ausgangsradius des Scherspaltes aus dem Scherteil entspricht, in welchem sich der Radius des Scherspaltes entgegen der Förderrichtung des Kunststoffs vergrößert, dadurch **gekennzeichnet,**
daß der Kunststoff vor Förderung in den Scherspalt bei einem Spaltradius vorplastifiziert wird, der dem Eintrittsradius in den Scherspalt entspricht.

2. Verfahren nach Anspruch 1, dadurch gekennzeichnet, daß eine kontinuierliche Spaltweiteneinstellung vorgesehen wird.

3. Verfahren nach Anspruch 1 oder 2, dadurch gekennzeichnet, daß die Einstellung der Spaltweite während des Extrudierens gesteuert wird.

4. Verfahren nach Anspruch 3, dadurch gekennzeichnet, daß als Steuerung ein Regelverfahren vorgesehen ist.

5. Verfahren nach Anspruch 3 oder 4, dadurch gekennzeichnet, daß als Steuer- oder Regelgröße das antriebsseitige Reaktionsdrehmoment verwendet wird.

6. Verfahren nach einem der Ansprüche 3 bis 5, dadurch gekennzeichnet, daß als Steuer- oder Regelgröße die Massentemperatur im Scherspalt, oder eine davon abgeleitete sekundäre Temperatur, verwendet wird.

7. Verfahren nach einem der Ansprüche 3 bis 6, dadurch gekennzeichnet, daß als Steuer- oder Regelgröße der Staudruck im Spalt zwischen Torpedo und Gehäuse des Extruders verwendet wird.

8. Verfahren nach einem der Ansprüche 1 bis 7, dadurch gekennzeichnet, daß zugleich mit der Weite des Scherspaltes der Staudruck verstellt wird.

9. Extruder zum Ausführen des Verfahrens nach einem der Ansprüche 1 bis 8, mit einer zum Vorplastifizieren des Kunstorgesehenen Förder- und Plastifiziereinheit (4), einer dieser folgenden Schereinheit (6), in der sich die Außenkontur des Scherteils (20) und die Innenkontur des diesen umgebenden Zylinders (22) gleichsinnig konisch in Extrusionsrichtung des Extruders verjüngen, und einem der Schereinheit (6) folgenden Mischteil (8), in dem der Radius der Extruderschnecke (12) dem Anschlußradius an deren Scherteil (20) entspricht, wobei die Extruderschnecke (12) axial verschiebbar angeordnet ist, dadurch gekennzeichnet, daß der Radius der Extruderschnecke (12) in der Förder- und Plastifiziereinheit (4) dem Anschlußradius an dem Scherteil (20) entspricht.

10. Extruder nach Anspruch 9, dadurch gekennzeichnet, daß die Konuswinkel der Außenkontur des Scherteils (20) und der Innenkontur des Zylinders (22) gleich sind.

11. Extruder nach Anspruch 9 oder 10, dadurch gekennzeichnet, daß der mit dem Scherteil (20) zusammenwirkende Zylinder (22) mit den in Extrusionsrichtung vorhergehenden und nachfolgenden Bereichen des Zylinderrohres (14) lösbar verbunden ist.

12. Extruder nach einem der Ansprüche 9 bis 11, dadurch gekennzeichnet, daß der Scherteil (20) mit den in Extrusionsrichtung vorhergehenden und nachfolgenden Bereichen der Extruderschnecke (12) lösbar verbunden ist.

13. Extruder nach einem der Ansprüche 9 bis 12, dadurch gekennzeichnet, daß die Extruderschnecke (12) an einem verschiebbaren Drucklager (70) befestigt ist, das von einer auf die Extruderschnecke einwirkenden Verschiebekraftquelle beaufschlagt ist.

14. Extruder nach Anspruch 13, dadurch gekennzeichnet, daß die Verschiebekraftquelle dem die Extruderschnecke (12) zurückstellenden Staudruck einsinnig entgegenwirkt.

15. Extruder nach Anspruch 13, dadurch gekennzeichnet, daß die Verschiebekraftquelle zur Verschiebung der Extruderschnecke (12) in beiden Achsrichtungen vorgesehen ist.

16. Extruder nach einem der Ansprüche 13 bis 15, dadurch gekennzeichnet, daß das Drucklager (70) mit der Verschiebekraftquelle durch mehrere über den Umfang verteilte Stellglieder (66) verbunden ist.

17. Extruder nach einem der Ansprüche 13 bis 16, dadurch gekennzeichnet, daß das Drucklager (70) mit der Extruderschnecke (12) über eine Hülse (52) verbunden ist, die mit der Extruderschnecke (12) unverschieblich und drehfest verbunden ist und die umfangsseitig axial verschiebbar mit einem ortsfest im Extruder angeordneten Drehantrieb (Endzahnrad 54) in Antriebsverbindung steht.

18. Extruder nach einem der Ansprüche 9 bis 17, gekennzeichnet durch einen die Kunststoffmassentemperatur im Scherspalt direkt oder indirekt messenden Meßfühler (82).

19. Extruder nach einem der Ansprüche 9 bis 18, gekennzeichnet durch einen den Staudruck im Spalt am Torpedo (16) messenden Meßfühler (84), vorzugsweise in Verbindung mit einem verstellbaren Stauring (28).

20. Anwendung des Verfahrens nach einem der Ansprüche 1 bis 8 oder eines Extruders nach einem der Ansprüche 9 bis 19 auf die Verarbeitung von Mischkunststoffen.

21. Anwendung des Verfahrens nach einem der Ansprüche 1 bis 8 oder eines Extruders nach einem der Ansprüche 9 bis 19, insbesondere Anspruch 21, auf die Verarbeitung von Recycling-Kunststoffen.

22. Anwendung nach Anspruch 21 mit der Maßgabe, daß ein Einschnecken-Extruder verwendet wird.

## Claims

1. Process for the extrusion of plastics in which the shear clearance width in a shear section of the extruder, which further plasticates a pre-plasticated plastic, between the extruder screw and the barrel surrounding this in the shear section is adjusted and, for the width setting of the shear clearance, the surfaces at the extruder screw and barrel defining the clearance width of the shear clearance are displaced relative to one another, the sheared plastic transported out of the shear clearance being mixed in the mixing clearance joining in the conveying direction, with a radius of the mixing clearance corresponding to the starting radius of the shear clearance from the shear section, in which the radius of the shear clearance is enlarged contrary to the conveying direction of the plastic, characterised in that the plastic is pre-plasticated before conveyance into the shear clearance with a clearance radius corresponding to the radius at the entrance to the shear clearance.

2. Process according to Claim 1, characterised in that a continuous clearance width adjustment is provided.

3. Process according to Claim 1 or 2, characterised in that the adjustment of the clearance width is controlled during the extrusion.

4. Process according to Claim 3, characterised in that a closed-loop process is provided as control.

5. Process according to Claim 3 or 4, characterised in that the reaction torque at the drive side is used as open-loop or closed-loop controlled variable.

6. Process according to one of Claims 3 to 5, characterised in that the temperature of the material in the shear clearance, or a secondary temperature derived therefrom, is used as the open-loop or closed-loop controlled variable.

7. Process according to one of Claims 3 to 6, characterised in that the back pressure in the clearance between torpedo and housing of the extruder is used as open-loop or closed-loop controlled variable.

8. Process according to one of Claims 1 to 7, characterised in that the back pressure is adjusted simultaneously with the width of the shear clearance.

9. Extruder for carrying out the process according to one of Claims 1 to 8, having a conveying and plasticating unit (4) provided for pre-plasticating the plastic, a shear unit (6) following this and in which the outer contour of the shear section (20) and the inner contour of the barrel (22) surrounding this taper conically in the same direction in the extrusion direction of the extruder, and a mixing section (8) following the shear unit (6), in which mixing section the radius of the extruder screw (12) corresponds to the connecting radius at the shear section (20) thereof, the extruder screw (12) being disposed so as to be axially displaceable, characterised in that the radius of the extruder screw (12) in the conveying and plasticating unit (4) corresponds to the connecting radius at the shear section (20).

10. Extruder according to Claim 9, characterised in that the cone angle of the outer contour of the shear section (20) and the inner contour of the barrel (22) are equal.

11. Extruder according to Claim 9 or 10, characterised in that the barrel (22) acting together with the shear section (20) is detachably connected to the regions of the barrel tube (14) preceding and following it in the direction of extrusion.

12. Extruder according to one of Claims 9 to 11, characterised in that the shear section (20) is detachably connected with the regions of the extruder screw (12) preceding and following it in the direction of extrusion.

13. Extruder according to one of Claims 9 to 12, characterised in that the extruder screw (12) is fixed to a displaceable thrust bearing (70) which is acted on by a displacement power source operating on the extruder screw.

14. Extruder according to Claim 13, characterised in that the displacement power source in one direction counteracts the back pressure resetting the extruder screw (12).

15. Extruder according to Claim 13, characterised in that the displacement power source for displacing the extruder screw (12) is provided in both axial directions.

16. Extruder according to one of Claims 13 to 15, characterised in that the thrust bearing (70) is connected to the displacement power source via a plurality of actuators (66) distributed around the circumference.

17. Extruder according to one of Claims 13 to 16, characterised in that the thrust bearing (70) is connected to the extruder screw (12) via a sleeve (52) which is connected to the extruder screw (12) in a nondisplaceable and non-rotatable manner and is in driving connection at its circumferential side in an axially displaceable manner with a rotary drive (output gearwheel 54) disposed in a stationary manner in the extruder.

18. Extruder according to one of Claims 9 to 17, characterised by a measuring sensor (82) directly or indirectly measuring the plastics material temperature in the shear clearance.

19. Extruder according to one of Claims 9 to 18, characterised by a measuring sensor (84) measuring the back pressure in the clearance at the torpedo (16) and preferably in connection with an adjustable restrictor ring (28).

20. Application of the process according to one of Claims 1 to 8 or of an extruder according to one of Claims 9 to 19 to the processing of mixed plastics.

21. Application of the process according to one of Claims 1 to 8 or of an extruder according to one of Claims 9 to 19, especially Claim 21, to the processing of recycling plastics.

22. Application according to Claim 21 with the proviso that a single-screw extruder is used.

## Revendications

1. Procédé d'extrusion de matières plastiques, dans lequel la largeur de la fente de cisaillement d'une partie de cisaillement de l'extrudeuse qui plastifie encore la matière plastique préplastifiée, entre la vis d'extrusion et le cylindre qui l'entoure dans la partie de cisaillement, est réglée et, pour régler la largeur de la fente de cisaillement, les surfaces de la vis d'extrusion et du cylindre qui définissent sa largueur de fente sont déplacées les unes par rapport aux autres, la matière plastique cisaillée extraite de la fente de cisaillement étant mélangée dans la fente mélangeuse qui fait suite dans la direction de transport, pour un rayon de la fente mélangeuse qui correspond au rayon de sortie de la fente de cisaillement de la partie de cisaillement, dans lequel le rayon de la fente de cisaillement augmente en sens inverse de la direction de transport de la matière plastique, caractérisé en ce que la matière plastique, avant le transport dans la fente de cisaillement, est préplastifiée à un rayon de fente qui correspond au rayon d'entrée de la fente de cisaillement.

2. Procédé selon la revendication 1, caractérisé en ce qu'il est prévu un réglage continu de la largeur de fente.

3. Procédé selon la revendication 1 ou 2, caractérisé en ce que le réglage de la largeur de fente est commandé au cours de l'extrusion.

4. Procédé selon la revendication 3, caractérisé en ce qu'il est prévu comme commande un procédé de régulation.

5. Procédé selon la revendication 3 ou 4, caractérisé en ce que l'on utilise comme grandeur de commande ou de régulation le couple de rotation de réaction du côté de l'entraînement.

6. Procédé selon l'une des revendications 3 à 5, caractérisé en ce que l'on utilise comme grandeur de commande ou de régulation la température de la masse dans la fente de cisaillement ou une température secondaire déduite de celle-ci.

7. Procédé selon l'une des revendications 3 à 6, caractérisé en ce que l'on utilise comme grandeur de commande ou de régulation la pression dynamique dans la fente entre la torpille et le carter de l'extrudeuse.

8. Procédé selon l'une des revendications 1 à 7, caractérisé en ce que la pression dynamique est ajustée en même temps que la largeur de la fente de cisaillement.

9. Extrudeuse pour la mise en oeuvre du procédé selon l'une des revendications 1 à 8, comportant une unité de transport et de plastification (4) prévue pour la préplastification de la matière plastique, une unité de cisaillement (6) qui la suit et dans laquelle le contour externe de la partie de cisaillement (20) et le contour interne du cylindre (22) qui l'entoure se rétrécissent dans le même sens de manière conique dans la direction d'extrusion de l'extrudeuse, et une partie de mélange (8) qui suit l'unité de cisaillement (6) et dans laquelle le rayon de la vis d'extrusion (12) correspond au rayon de raccordement au niveau de sa partie de cisaillement (20), la vis d'extrusion (12) étant déplaçable axialement, caractérisée en ce que le rayon de la vis d'extrusion (12) correspond au rayon de raccordement au niveau de la partie de cisaillement (20) dans l'unité de transport et de plastification (4).

10. Extrudeuse selon la revendication 9, caractérisée en ce que les angles de cône du contour externe de la partie de cisaillement (20) et du contour interne du cylindre (22) sont identiques.

11. Extrudeuse selon la revendication 9 ou 10, caractérisée en ce que le cylindre (22) qui coopère avec la partie de cisaillement (20) est relié de manière amovible aux domaines du tube cylindrique (14) qui précèdent et qui suivent dans la direction de l'extrusion.

12. Extrudeuse selon l'une des revendications 9 à 11, caractérisée en ce que la partie de cisaillement (20) est reliée de manière amovible aux domaines de la vis d'extrusion (12) qui précèdent et qui suivent dans la direction de l'extrusion.

13. Extrudeuse selon l'une des revendications 9 à 12, caractérisée en ce que la vis d'extrusion (12) est fixée à un palier de poussée (70) déplaçable qui est sollicité par une source de forces de déplacement qui agit sur la vis d'extrusion.

14. Extrudeuse selon la revendication 13, caractérisée en ce que la source de forces de déplacement agit dans un sens à l'encontre de la pression dynamique qui retient la vis d'extrusion (12).

15. Extrudeuse selon la revendication 13, caractérisée en ce que la source de forces de déplacement est prévue pour le déplacement de la vis d'extrusion (12) dans les deux directions axiales.

16. Extrudeuse selon l'une des revendications 13 à 15, caractérisée en ce que le palier de poussée (70) est relié à la source de forces de déplacement par plusieurs éléments de réglage (66) répartis sur la périphérie.

17. Extrudeuse selon l'une des revendications 13 à 16, caractérisée en ce que le palier de poussée (70) est relié à la vis d'extrusion (12) par un manchon (52) qui est relié de manière indéplaçable et solidaire en rotation à la vis d'extrusion (12) et qui est relié par entraînement du côté de la périphérie et de manière déplaçable axialement à un dispositif d'entraînement en rotation (roue dentée terminale 54) fixe, prévu dans l'extrudeuse.

18. Extrudeuse selon l'une des revendications 9 à 17, caractérisée par un capteur (82) qui mesure directement ou indirectement la température de la masse de matière plastique dans la fente de cisaillement.

19. Extrudeuse selon l'une des revendications 9 à 18, caractérisée par un capteur (84) qui mesure la pression dynamique dans la fente au niveau de la torpille (16), et qui est de préférence relié à un diaphragme (28) déplaçable.

20. Utilisation du procédé selon l'une des revendications 1 à 8 ou d'une extrudeuse selon l'une des revendications 9 à 19 pour la mise en oeuvre de mélanges de matières plastiques.

21. Utilisation du procédé selon l'une des revendications 1 à 8 ou d'une extrudeuse selon l'une des revendications 9 à 19, en particulier selon la revendication 21, pour la mise en oeuvre de matières plastiques de recyclage.

22. Utilisation selon la revendication 21, caractérisée par l'utilisation d'une extrudeuse à une vis.
